# EUROPÄISCHE PATENTSCHRIFT

(11) **EP 3 813 622 B1**
(45) Veröffentlichungstag und Bekanntmachung des Hinweises auf die Patenterteilung: **09.08.2023**
(21) Anmeldenummer: 19731718.3
(22) Anmeldetag: 17.06.2019
(51) Int. Cl.: A47L 7/00, B25F 5/00

(54) **SYSTEM AUS SAUGGERÄT UND HANDWERKZEUGMASCHINE UND VERFAHREN ZUM BETREIBEN DES SYSTEMS**
SYSTEM OF SUCTION DEVICE AND HAND TOOL AND METHOD OF OPERATING THE SYSTEM
SYSTÈME D'APPAREIL D'ASPIRATION ET OUTIL À MAIN ET PROCÉDÉ D'OPERATION DU SYSTÈME

(30) Priorität: 29.06.2018 DE 102018210682
(43) Veröffentlichungstag der Anmeldung: 05.05.2021
(73) Patentinhaber: Robert Bosch GmbH, 70442 Stuttgart (DE)
(72) Erfinder: SCHWILLE, Matthias Christian, 72070 Tuebingen (DE); SPANGER, Christian, 71101 Schoenaich (DE); BLAESIUS, Jana, 71638 Ludwigsburg (DE); INDINO, Ruggero, 70180 Stuttgart (DE); VAN DEN BOGAERT, Philippe, 70825 Korntal (DE); DOEPPNER, Holger Alexander, 72766 Reutlingen (DE); DONATH, Nils, 70180 Stuttgart (DE); WALL, Michael, 70178 Stuttgart (DE); BARKER, Christopher Michael, 70597 Stuttgart (DE)
(86) Internationale Anmeldenummer: PCT/EP2019/065895
(87) Internationale Veröffentlichungsnummer: WO 2020/002029

(56) Entgegenhaltungen:
- DE-A1-102012 003 076
- DE-A1-102014 005 222
- JP-A- 2001 179 705
- JP-A- 2005 102 791
- US-A- 6 044 519
- US-A1- 2008 022 479
- US-A1- 2010 199 453
- US-A1- 2014 008 087

## Beschreibung

Die vorliegende Erfindung betrifft ein Verfahren zum Betreiben eines Systems, wobei das System zumindest ein Sauggerät und zumindest eine Handwerkzeugmaschine umfasst.

### Stand der Technik

Aus der DE 10 2012 003 076 A1 ist bereits ein System bekannt, umfassend zumindest ein Sauggerät und zumindest eine Hand-Werkzeugmaschine. Das Sauggerät umfasst eine Sauggerät-Kommunikationseinrichtung zur Kommunikation mit der Hand-Werkzeugmaschine. Die Hand-Werkzeugmaschine weist hierzu eine Extern-Kommunikationseinrichtung auf.

In der DE 10 2014 005222 A1 wird ein Kopplungssystem für einen Staubsammler beschrieben, das einen Sender enthält, der an einem elektrischen Kraftwerkzeug vorgesehen ist und ein Funksignal senden kann, und einen Empfänger, der an einem Ansaugschlauch eines Staubsammlers vorgesehen ist und das Funksignal von dem Sender des elektrischen Kraftwerkzeuges empfangen kann.

US 2014/008087 A1 offenbart ein System von Elektrowerkzeugen umfassend ein erstes Elektrowerkzeug und ein zweites Elektrowerkzeug mit verschiedenen Energieversorgungen.

Das zweite Elektrowerkzeug startet automatisch in Abhängigkeit von dem Start des ersten Elektrowerkzeugs.

Aus der JP 2001 179705 A ist ein Mikrophon an einem Ende eines Saugschlauchs bekannt. Das Betriebsgeräusch oder die Betriebsvibration des Motors kann erfasst werden. Der Betrieb des Sauggeräts ist mit dem Betrieb der akku- und motorbetriebenen Werkzeugmaschine verknüpft.

Die JP 2005 102791 A beschreibt ein Sauggerät mit einem ferngesteuerten Sender, der ein Signal übermitteln kann und lösbar mit einem Ende eines Saugschlauchs verbunden ist, und mit einem ferngesteuerten Empfänger um Start- und/oder Stoppbefehle an einen Motor des Sauggeräts zu senden.

### Offenbarung der Erfindung

Die vorliegende Erfindung geht aus von einem Verfahren zum Betreiben eines Systems, wobei das System zumindest ein Sauggerät und zumindest eine Handwerkzeugmaschine umfasst. Es wird eine Kommunikationsverbindung zwischen dem Sauggerät und der Handwerkzeugmaschine, mittels zumindest einer Sauggerätkommunikationseinheit und zumindest einer Handwerkzeugmaschinenkommunikationseinheit, hergestellt. Weiter wird zumindest ein Kommunikationssignal mittels der Kommunikationsverbindung von der Handwerkzeugmaschine, insbesondere der Handwerkzeugmaschinenkommunikationseinheit, zu dem Sauggerät, insbesondere der Sauggerätkommunikationseinheit, übermittelt. Es wird vorgeschlagen, dass beim Einschalten des Sauggeräts zumindest ein Startsignal an die Handwerkzeugmaschine gesendet wird. Die Handwerkzeugmaschine wird nur aktivierbar, falls das Startsignal von der Handwerkzeugmaschine empfangen wird.

Die Erfindung stellt ein Verfahren zum Betreiben des Systems, umfassend das Sauggerät und die Handwerkzeugmaschine, zur Steigerung einer Arbeitssicherheit bereit. Die Arbeitssicherheit wird insbesondere dadurch gesteigert, dass die Handwerkzeugmaschine nur dann aktivierbar ist, wenn das Startsignal von der Handwerkzeugmaschine empfangen wird. Vor allem wenn als Handwerkzeugmaschine beispielsweise ein Bohrhammer, eine Handkreissäge oder weitere Staub- und/oder Schmutzpartikel erzeugende Handwerkzeugmaschinen, wie sie aus dem Stand der Technik bekannt sind, verwendet werden. Hierbei werden dann erzeugte Staub- und/oder Schmutzpartikel durch die Verwendung der Handwerkzeugmaschine direkt und unmittelbar von dem Sauggerät abgesaugt.

Das Sauggerät weist in an sich bekannter Weise insbesondere ein Sauggerätgehäuse, eine Sauggerätenergieversorgung, zumindest einen Saugschlauch und eine Staubsammelvorrichtung auf.

Das Sauggerätgehäuse kann zumindest eine Sauggerätnetzsteckdose umfassen. Ferner kann das Sauggerätgehäuse zumindest eine Sauggerätbedieneinheit und zumindest eine Sauggeräthalteeinheit aufweisen.

Die Sauggerätnetzsteckdose ist zumindest eine Netzsteckdose des Sauggeräts und ist am Sauggerätgehäuse angeordnet. Die zumindest eine Netzsteckdose des Sauggeräts ist dazu vorgesehen, ein angeschlossenes elektrisches Gerät oder eine angeschlossene Handwerkzeugmaschine mit Energie zu versorgen, wenn das Sauggerät selbst mit Energie versorgt ist.

Die Sauggerätbedieneinheit umfasst zumindest ein Sauggerätbedienelement, das dazu ausgebildet ist, durch einen Benutzer bedient zu werden und Schaltsignale zu erzeugen. Die Schaltsignale können dann eine Sauggerätantriebseinheit steuern. Das Sauggerätbedienelement kann an einer Seite des Sauggerätgehäuses angeordnet sein. Sauggerätbedienelemente können beispielsweise ein Hauptschalter oder ein Einstellschalter sein. Der Hauptschalter ist zumindest dazu vorgesehen, die Sauggerätantriebseinheit ein- und auszuschalten. Der Einstellschalter ist zumindest dazu ausgebildet, eine Saugleistung des Sauggeräts einzustellen. Die Sauggeräthalteeinheit umfasst zumindest ein Sauggeräthalteelement, beispielsweise einen Sauggeräthaltegriff, mit dem der Benutzer das Sauggerät halten kann. Zudem kann am Sauggerätgehäuse zumindest eine Sauggerätbewegungseinheit angebracht sein, sodass das Sauggerät zweckmäßig ein mobiles Sauggerät ist. Die Sauggerätbewegungseinheit ist als zumindest eine Rolle, zumindest als ein Rad oder dergleichen ausgebildet, damit es auf einem Untergrund bewegt werden kann. Bevorzugt ist das mobile Sauggerät als ein tragbares Sauggerät ausgestaltet, welches Rollen, Räder oder dergleichen aufweist oder aber keine Rollen, Räder oder dergleichen besitzt. Im Rahmen der vorliegenden Erfindung kann der Benutzer das Sauggerät mitnehmen und direkt an einem gewünschten Einsatzort einsetzen.

Die Sauggerätenergieversorgungseinheit ist eine Energieversorgungseinheit des Sauggeräts. Die Sauggerätenergieversorgungseinheit versorgt das Sauggerät mit elektrischer Energie. Hierbei kann das Sauggerät als ein akkubetriebenes Sauggerät oder als ein netzbetriebenes Sauggerät ausgebildet sein.

Das akkubetriebene Sauggerät ist mittels zumindest eines Akkus, insbesondere mittels eines Handwerkzeugmaschinenakkupacks, betreibbar. Hierdurch findet dann die Bereitstellung der Energie durch die Sauggerätenergieversorgungseinheit mittels des zumindest einen Akkus statt. Im Rahmen der vorliegenden Erfindung soll unter einem "Handwerkzeugmaschinenakkupack" ein Zusammenschluss von zumindest einer Ackuzelle und einem Akkupackgehäuse verstanden werden. Der Handwerkzeugmaschinenakkupack ist vorteilhafter Weise zur Energieversorgung von handelsüblichen akkubetriebenen Handwerkzeugmaschinen ausgebildet. Die zumindest eine Akkuzelle kann beispielsweise als eine Li-Ion-Akkuzelle mit einer Nennspannung von 3,6 V ausgebildet sein. Beispielsweise umfasst der Handwerkzeugmaschinenakkupack zumindest fünf Akkuzellen und eine Gesamtbetriebsnennspannung von 18 V, um einen leistungsgerechten Betrieb des Sauggeräts zu ermöglichen.

Das netzbetriebene Sauggerät ist mittels einem Stromversorgungskabel an eine externe Netzsteckdose verbindbar. Hierdurch findest dann die Bereitstellung der Energie durch die Sauggerätenergieversorgungseinheit mittels einer Netzsspannung statt. Die externe Netzsteckdose kann eine Netzspannung von beispielsweise 100 V, 110 V, 120 V, 127 V, 220 V, 230 V oder 240 V mit 50 Hz oder 60 Hz bereitstellen, aber auch eine Dreiphasenwechselspannung. Die möglichen Ausgestaltungen der externen Netzsteckdose und die damit verbundenen verfügbaren Netzspannungen sind dem Fachmann hinlänglich bekannt.

Der Saugschlauch weist zumindest eine Saugöffnung auf und ist vorzugsweise lösbar am Sauggerätgehäuse anbringbar. Die Saugöffnung ist dazu ausgebildet, mittels eines Saugstroms anfallende Partikel, insbesondere Staub- und/oder Schmutzpartikel, während eines Betriebs des Sauggeräts aufzunehmen. Zudem ist der Saugschlauch mit der Handwerkzeugmaschine verbindbar, vorzugsweise lösbar verbindbar. Der Saugschlauch ist dabei dazu ausgebildet, während des Betriebs der Handwerkzeugmaschine die anfallenden Partikel, insbesondere Staub- und/oder Schmutzpartikel, über die Saugöffnung von einer Arbeitsfläche, einem Arbeitsbereich oder einem Arbeitsgebiet der Handwerkzeugmaschine abzutransportieren. Für einen Abtransport anfallender Partikel, insbesondere Staub- und/oder Schmutzpartikel, mittels des Saugschlauchs ist das Sauggerät in Betrieb. Über den Saugschlauch werden die anfallenden Partikel, insbesondere die Staub- und/oder Schmutzpartikel, zur Staubsammelvorrichtung des Sauggeräts, in an sich bekannterweise, befördert.

Im Rahmen der vorliegenden Erfindung soll unter einer "Handwerkzeugmaschine" insbesondere eine handgeführte Maschine, bevorzugt eine akkubetriebene Handwerkzeugmaschine verstanden werden. Es ist jedoch auch eine netzbetriebene oder eine pneumatisch betriebene Handwerkzeugmaschine denkbar. In an sich bekannter Weise umfasst die Handwerkzeugmaschine ein Handwerkzeugmaschinengehäuse, eine Antriebseinheit und eine Handwerkzeugmaschinenenergieversorgungseinheit.

Das Handwerkzeugmaschinengehäuse nimmt die Antriebseinheit auf. Die Antriebseinheit umfasst zumindest einen Antriebsmotor und kann in einer Ausführungsform zumindest ein Getriebe aufweisen. Der Antriebsmotor kann insbesondere als zumindest ein Elektromotor ausgebildet sein. Das Getriebe kann als zumindest ein Planetengetriebe ausgebildet sein, wobei es beispielsweise schaltbar sein kann. Die Erfindung kann auch bei anderen Motorenarten oder Getriebearten zur Anwendung kommen. Zusätzlich umfasst die Handwerkzeugmaschine die Handwerkzeugmaschinenenergieversorgungseinheit, wobei die Handwerkzeugmaschinenenergieversorgungseinheit für einen bevorzugten Akkubetrieb mittels Akkus, insbesondere Handwerkzeugmaschinenakkupacks, und/oder für einen Netzbetrieb vorgesehen ist.

Die Kommunikationsverbindung zwischen dem Sauggerät und der Handwerkzeugmaschine wird mittels der Sauggerätkommunikationseinheit und der Handwerkzeugmaschinenkommunikationseinheit hergestellt. Dabei ist die Sauggerätkommunikationseinheit eine Kommunikationseinheit des Sauggeräts und die Handwerkzeugmaschinenkommunikationseinheit eine Kommunikationseinheit der Handwerkzeugmaschine. Im Rahmen der vorliegenden Erfindung ist die Kommunikationseinheit des Sauggeräts und/oder der Handwerkzeugmaschine dazu ausgebildet, die Kommunikationssignale zu senden und/oder zu empfangen. Die Kommunikationssignale können leitungsgebunden, über eine Drahtverbindung oder aber über Leiterbahnen auf einer Leiterplatine, übertragen werden und/oder die Kommunikationssignale können drahtlos übermittelt werden. Eine drahtlose Übermittelung der Kommunikationssignale kann dabei in Form von Bluetooth, WLAN, Infrarot, Nahfeldkommunikation (NFC) mittels RFID-Technik sein, als auch weitere, dem Fachmann geläufige, drahtlose Übermittelungen der Kommunikationssignale. Verwendete Kommunikationsprotokolle können hierbei Bluetooth Smart, GSM, UMTS, LTE, ANT, ZigBee, LoRa, SigFox, NB-loT, BLE, IrDA sein, als auch weitere, dem Fachmann geläufige, Kommunikationsprotokolle. Die Kommunikationverbinung kann daher drahtlos oder aber drahtgebunden sein.

Erfindungsgemäß wird beim Einschalten des Sauggeräts das Startsignal als das Kommunikationssignal mittels der Kommunikationverbindung von dem Sauggerät, insbesondere der Sauggerätkommunikationseinheit, an die Handwerkzeugmaschine, insbesondere der Sauggerätkommunikationseinheit, gesendet. Das Startsignal kann dabei eine Information bezüglich eines Betriebs des Sauggeräts umfassen. Wenn die Handwerkzeugmaschine, insbesondere die Handwerkzeugmaschinenkommunikationseinheit, das Startsignal als das Kommunikationsignal empfängt, ist die Handwerkzeugmaschine, insbesondere die Antriebseinheit, aktivierbar. Insbesondere kann ein Benutzer erst dann die Handwerkzeugmaschine in Betrieb nehmen, wenn die Handwerkzeugmaschinenkommunikationseinheit das Startsignal des Sauggeräts ermpfangen hat.

Mittels eines Handschalters einer Signalgebereinheit der Handwerkzeugmaschine wird zumindest ein Betätigungssignal erzeugt und an eine Signalverarbeitungseinheit der Handwerkzeugmaschine übermittelt. Das Handwerkzeugmaschinengehäuse nimmt dabei den Handschalter, die Signalgebereinheit und die Signalverarbeitungseinheit zumindest teilweise auf. Der Handschalter ist dazu ausgebildet, von dem Benutzer betätigt zu werden, um die Antriebseinheit in Betrieb zu nehmen. Wird der Handschalter betätigt, wird das Betätigungssignal erzeugt und an die Signalverarbeitungseinheit weitergeleitet. Das Betätigungssignal umfasst dabei zumindest eine Information darüber, dass der Benutzer den Handschalter betätigt. Die Signalgebereinheit weist hierbei zumindest den Handschalter auf und ist dazu vorgesehen, Signale zum Steuern und/oder Regeln der Handwerkzeugmaschine zu geben. Zusätzlich ist die Signalgebereinheit dazu ausgebildet, zumindest das Betätigungssignal an die Signalverarbeitungseinheit zu übermitteln. Die Übermittlung des Betätigungssignals zwischen der Signalgebereinheit und der Signalverarbeitungseinheit kann dabei drahtgebunden, leitungsgebunden, mittels Leiterbahnen auf zumindest einer Platine oder drahtlos erfolgen. Die Signalverarbeitungseinheit ist zumindest dazu ausgebildet, das Betätigungssignal zu empfangen und zu verarbeiten.

Das Betätigungssignal wird als das Kommunikationssignal an das Sauggerät übermittelt. Nachdem die Signalverarbeitungseinheit das Betätigungssignal von der Signalgebereinheit empfangen hat, übermittelt die Signalverarbeitungseinheit das Betätigungssignal an die Handwerkzeugmaschinenkommunikationseinheit. Diese Übermittlung kann dabei drahtgebunden, leitungsgebunden, mittels Leiterbahnen auf zumindest einer Platine oder drahtlos erfolgen. Die Handwerkzeugmaschinenkommunikationseinheit übermittelt das Betätigungssignal als Kommunikationssignal mittels der Kommunikationsverbindung an das Sauggerät, insbesondere die Sauggerätkommunikationseinheit.

Mittels eines Signalgeberelements der Signalgebereinheit wird zumindest ein Verbindungssignal von der Handwerkzeugmaschine und dem Sauggerät erfasst und an die Signalverarbeitungseinheit übermittelt. Insbesondere prüft das Signalgeberelement einen Verbindungszustand von zumindest einem Teil des Sauggeräts, insbesondere dem Saugschlauch, ganz insbesondere einer Saugmuffe des Saugschlauchs, mit der Handwerkzeugmaschine, insbesondere einem Verbindungselement für das Sauggerät.

Der Verbindungszustand kann dabei "mit dem Sauggerät verbunden" oder "mit dem Sauggerät unverbunden" sein. Anschließend übermittelt das Signalgeberelement das Verbindungssignal an die Signalverarbeitungseinheit. Die Übermittlung des Verbindungsignal zwischen dem Signalgeberelement, insbesondere der Signalgebereinheit, und der Signalverarbeitungseinheit kann dabei wie oben beschrieben erfolgen. Die Signalverarbeitungseinheit empfängt das Verbindungssignal und verarbeitet es weiter. Weiter übermittelt die Signalverarbeitungseinheit das Verbindungssignal an die Handwerkzeugmaschinenkommunikationseinheit.

Das Verbindungssignal wird als das Kommunikationssignal an das Sauggerät übermittelt. Insbesondere empfängt die Handwerkzeugmaschinenkommunikationseinheit das Verbindungssignal und wandelt es in das Kommunikationssignal um. Anschließend übermittelt die Handwerkzeugmaschinenkommunikationseinheit das Kommunikationssignal mittels der Kommunikationsverbindung an das Sauggerät, insbesondere die Sauggerätkommunikationseinheit.

Das Sauggerät, insbesondere die Sauggerätkommunikationseinheit, empfängt das Kommunikationssignal. Zudem verarbeitet die Sauggerätkommunikationseinheit das Kommunikationssignal und kann dieses an zumindest eine Sauggerätsteuereinheit übermitteln. Die Sauggerätsteuereinheit ist dazu ausgebildet, das Sauggerät zu steuern und/oder zu regeln. Die Übermittlung des Kommunikationssignals von der Sauggerätkommunikationseinheit zu der Sauggerätsteuereinheit kann drahtgebunden, leitungsgebunden, mittels Leiterbahnen auf zumindest einer Platine oder drahtlos erfolgen.

Eine Sauggerätantriebseinheit wird eingeschalten, falls das Kommunikationssignal das Betätigungssignal und das Verbindungssignal umfasst. Insbesondere wird die Sauggerätantriebseinheit eingeschalten, falls das Verbindungssignal den Verbindungszustand "mit dem Sauggerät verbunden" aufweist. Die Sauggerätsteuereinheit kann das Kommunikationssignal auswerten und anschließend die Sauggerätantriebseinheit steuern und/oder regeln. Für den Fall, dass das Verbindungssignal den Verbindungszustand "mit dem Sauggerät unverbunden" umfasst, erfolgt keine weitere Aktion und die Sauggerätantriebseinheit bleibt außer Betrieb.

Nach dem Einschalten der Sauggerätantriebseinheit wandelt die Sauggerätkommunikationseinheit das Kommunikationssignal in das Startsignal um. Sobald die Sauggerätantriebseinheit eingeschalten wurde, übermittelt die Sauggerätsteuereinheit das Kommunikationssignal an die Sauggerätkommunikationseinheit. Mittels eines Mikroprozessors und/oder Mikrocontrollers kann die Sauggerätkommunikationseinheit das Kommunikationssignal in das Startsignal umwandeln. Anschließend übermittelt die Sauggerätkommunikationseinheit das Startsignal mittels der Kommunikationsverbindung an die Handwerkzeugmaschine, insbesondere die Handwerkzeugmaschinenkommunikationseinheit. Die Handwerkzeugmaschine wird aktivierbar, wenn die Handwerkzeugmaschinenkommunikationseinheit das Startsignal empfängt.

Mittels eines Sensorelements einer Sensoreinheit des Sauggeräts wird zumindest ein Prüfsignal zum Prüfen einer, insbesondere mechanischen, Verbindung von dem Sauggerät mit der Handwerkzeugmaschine erzeugt und in zumindest ein Steuersignal zur Steuerung des Sauggeräts und/oder der Handwerkzeugmaschine umgewandelt. Das Sensorelement prüft bei dem Betrieb der Handwerkzeugmaschine, ob nach einer vorgegebenen Zeitspanne, das Sauggerät, insbesondere der Saugschlauch, ganz insbesondere die Saugmuffe, weiterhin mit der Handwerkzeugmaschine, insbesondere dem Verbindungselement für das Sauggerät, die, insbesondere mechanische, Verbindung aufweist. Anschließend erzeugt das Sensorelement das Prüfsignal, wobei das Prüfsignal zumindest einen Prüfzustand "mit der Handwerkzeugmaschine verbunden" oder "mit der Handwerkzeugmaschine unverbunden" umfasst. Das Sensorelement wandelt das Prüfsignal, beispielsweise mittels eines Mikroprozessors und/oder eines Mikrocontrollers, in das Steuersignal um. Anschließend übermittelt das Sensorelement das Steuersignal an die Sauggerätsteuereinheit drahtgebunden, leitungsgebunden, mittels Leiterbahnen auf zumindest einer Platine oder drahtlos.

In einer alternativen Ausführungsform ist es denkbar, dass das Sensorelement das Prüfsignal an die Sauggerätsteuereinheit übermittelt und die Sauggerätsteuereinheit das Prüfsignal in das Steuersignal umwandelt.

Das Steuersignal wird von dem Sauggerät, insbesondere der Sauggerätkommunikationseinheit, an die Handwerkzeugmaschine, insbesondere die Handwerkzeugmaschinenkommunikationseinheit, übermittelt. Die Sauggerätkommunikationseinheit empfängt das Steuersignal von der Sauggerätsteuereinheit und sendet es mittels der Kommunikationsverbindung an die Handwerkzeugmaschine, insbesondere die Handwerkzeugmaschinenkommunikationseinheit. Die Handwerkzeugmaschinenkommunikationseinheit empfängt das Steuersignal und übermittelt dieses an die Signalverarbeitungseinheit.

Das Steuersignal wird von der Signalverarbeitungseinheit empfangen, verarbeitet und/oder zumindest an eine Steuereinheit der Handwerkzeugmaschine weitergeleitet. Die Steuereinheit steuert und/oder regelt die Handwerkzeugmaschine. Insbesondere steuert und/oder regelt die Steuereinheit die Antriebseinheit der Handwerkzeugmaschine.

Das Sauggerät und die Handwerkzeugmaschine, insbesondere die Antriebseinheit, werden gestoppt, falls das Steuersignal ein Stoppsignal ist. Das Stoppsignal wird aufgrund des Prüfsignals des Sensorelements erzeugt, falls das Sensorelement keine, insbesondere mechanische, Verbindung von dem Sauggerät, insbesondere dem Saugschlauch, ganz inbesondere der Saugmuffe des Saugschlauchs, mit der Hand-werkzeugmaschine, insbesondere dem Verbindungselement für das Sauggerät, erfasst. Das Stoppsignal verhindert einen weiteren Betrieb der Handwerkzeugmaschine, wenn das Sauggerät nicht mit der Handwerkzeugmaschine verbunden ist und steigert hierdurch die Arbeitssicherheit.

Das Sauggerät und die Handwerkzeugmaschine, insbesondere die Antriebseinheit, sind weiterhin betreibbar, falls das Steuersignal ein Aktivsignal ist. Das Sensorelement erzeugt als Prüfsignal das Aktivsignal, falls das Sensorelement die, insbesondere mechanische, Verbindung erfasst. Hierdurch wird ein weiterer Betrieb der Handwerkzeugmaschine mit unmittelbarer Absaugung von erzeugten Staub- und/oder Schmutzpartikeln gewährleistet.

In einer erfindungsgemäßen Ausgestaltung wird ein System zur Durchführung eines Verfahrens vorgeschlagen, wobei das System zumindest ein Sauggerät und zumindest eine Handwerkzeugmaschine umfasst. Das Sauggerät weist zumindest eine Sauggerätkommunikationseinheit und die Handwerkzeugmaschine zumindest eine Handwerkzeugmaschinenkommunikationseinheit auf. Die Sauggerätkommunikationseinheit und die Handwerkzeugmaschinenkommunikatonseinheit stellen eine Kommunikationverbindung her. Wie eingangs beschrieben, weist das Sauggerät das Sauggerätgehäuse auf. Die Sauggerätkommunikationseinheit ist dem Sauggerätgehäuse zugeordnet und in einer Ausführungsform im Wesentlichen innerhalb des Sauggerätgehäuses angeordnet. Die Handwerkzeugmaschine weist, wie oben beschrieben, das Handwerkzeugmaschinenengehäuse auf. Die Handwerkzeugmaschinenkommunikationseinheit ist an dem Handwerkzeugmaschinengehäuse angeordnet und in einer Ausführungsform im Wesentlichen innerhalb des Handwerkzeugmaschinengehäuses aufgenommen. Denkbar ist auch, dass die Handwerkzeugmaschinenkommunikationseinheit als ein externes Modul, insbesondere ein externen Steckmodul, ausgebildet ist, welches mit der Handwerkzeugmaschine, insbesondere lösbar, verbindbar ist.

In einer Ausführungsform weist die Handwerkzeugmaschine eine Signalgebereinheit auf. Die Signalgebereinheit umfasst zumindest ein Signalgeberelement und zumindest einen Handschalter zur Erzeugung eines Betätigungssignals. Die Handwerkzeugmaschine weist eine Signalverarbeitungseinheit auf. Die Signalverarbeitungseinheit ist dazu ausgebildet, zumindest Signale von zumindest der Signalgebereinheit zu empfangen, zu verarbeiten und/oder weiterzuleiten. Das Handwerkzeugmaschinengehäuse kann zumindest teilweise die Signalgebereinheit, insbesondere den Handschalter und/oder das Signalgeberelement, aufnehmen. Der Handschalter ist derart am Handwerkzeugmaschinengehäuse angeordnet, dass dieser von dem Benutzer mit zumindest einer Hand, insbesondere mit einem Finger seiner Hand, betätigbar ist. Die Signalverarbeitungseinheit kann ein Mikroprozessor und/oder ein Mikrocontroller sein, um die Signale, wie beispielsweise das Betätigungssginal, zu empfangen, zu verarbeiten und/oder weiterzuleiten.

In einer Ausführungsform weist das Sauggerät eine Sensoreinheit mit zumindest einem Sensorelement zum Erzeugen eines Prüfsignals auf. Die Sensoreinheit kann beispielsweise dem Saugschlauch des Sauggeräts zugeordnet sein. In einer bevorzugten Ausführungsform weist eine Saugmuffe des Saugschlauchs das Sensorelement auf, wobei das Sensorelement an der Saugmuffe angeordnet ist. Das Sensorelement kann das Prüfsignal, indem es eine, insbesondere mechanische, Verbindung von dem Sauggerät, insbesondere dem Saugschlauch, ganz inbesondere der Saugmuffe des Saugschlauchs, und der Handwerkzeugmaschine, insbesondere einem Verbindungselement für das Sauggerät, überprüft, erzeugen. Wie oben beschrieben, umfasst das Prüfsignal eine Verbindungsinformation zwischen dem Sauggerät und der Handwerkzeugmaschine.

In einer Ausführungsform ist das Sensorelement ein mechanisches Sensorelement. Das mechanische Sensorelement kann hierbei als ein mechanischer Schalter zur Erzeugung von elektrischen Signalen ausgebildet sein.

In einer nächsten Ausführungsform ist das Sensorelement ein elektrisches Sensorelement. Hierbei kann das elektrische Sensorelement zumindest eine Spule und/oder zumindest eine Antenne umfassen, um elektrische Signale zu erzeugen. Hierzu kann beispielsweise ein kapazitives Sensorboard verwendet werden. Das kapazitive Sensorboard kann eine Änderung einer Dielektrizitätskonstante messen und mit einem hinterlegten Referenzwert vergleichen. Das kapazitive Sensorboard kann die Änderung der Dielektrizitätskonstante erfassen und hierüber erkennen, ob die, insbesondere mechanische, Verbindung von dem Sauggerät mit der Handwerkzeugmaschine ausgebildet ist. Es ist auch denkbar, dass mit Hilfe der Spule und der Antenne lokal erzeugte elektrische Felder erfasst werden, um so die, insbesondere mechanische, Verbindung von dem Saugschlauch mit der Handwerkzeugmaschine zu detektieren. Alternativ ist es auch denkbar, dass der Saugschlauch mit der Handwerkzeugmaschine einen elektrischen Kontaktschluss herstellt.

In einer weiteren Ausführungsform ist das Sensorelement ein optisches Sensorelement. Das optische Sensorelement kann als ein optischer Schalter mittels beispielsweise zumindest einer Lichtquelle, wie beispielsweise eine LED, zumindest einer Lichtschranke und/oder zumindest eines lichtempfindlichen Sensors, wie beispielsweise einer Photodiode, ausgebildet sein.

In einer Ausführungsform ist das Signalgeberelement an zumindest einem Teil, insbesondere zumindest einem Sauggerätverbindungselement, der Handwerkzeugmaschine angeordnet. In dieser Ausführungsform ist der Teil der Handwerkzeugmaschine, insbesonder das Sauggerätverbindungselement, als zumindest eine Verbindungsmuffe für das Sauggerät ausgebildet. Die Verbindungsmuffe kann hierbei den Saugschlauch, insbesondere die Saugmuffe, aufnehmen und eine mechanische Verbindung herstellen. Aufgrund der mechanischen Verbindung von dem Saugschlauch mit der Verbindungsmuffe wird ermöglicht, dass erzeugte Staub- und/oder Schmutzpartikel von zumindest der Arbeitsfläche abtransportiert und unmittelbar von dem Sauggerät abgesaugt werden.

In einer weiteren Ausführungsform ist das Signalgeberelement an zumindest einem Teil, insbesondere einem Sauggerätverbindungselement, eines Zubehörs der Hand-werkzeugmaschine angeordnet. Das Zubehör ist mechanisch und/oder elektrisch mit der Handwerkzeugmaschine verbindbar. Das Zubehör kann beispielsweise ein Absaugmodul für ein Bohrhammer sein. Weiter kann das Zubehör mit der Handwerkzeugmaschine mechanisch verbindbar, insbesondere koppelbar sein, um eine mechanische Verbindung zwischen dem Zubehör und der Handwerkzeugmaschine herzustellen. Zudem kann das Zubehör auch eine elektrische Verbindung mit der Handwerkzeugmaschine herstellen, sodass das Zubehör über die Handwerkzeugmaschinenenergieversorgungseinheit über Energie versorgt wird. Es ist auch denkbar, dass das Zubehör über eine Zubehörenergieversorungseinheit zu einer unabhängigen Energieversorgung verfügt. Das Zubehör ist derart ausgebildet, dass es bei dem Betrieb der Handwerkzeugmaschine erzeugte Staub- und/oder Schmutzpartikel direkt und unmittelbar von zumindest der Arbeitsfläche abtransportiert. Für einen weiteren Abtransport der erzeugten Staub- und/oder Schmutzpartikel weist das Zubehör eine Verbindungsmuffe als den zumindest einen Teil des Zubehörs, insbesondere des Sauggerätverbindungselements, auf, sodass der Saugschlauch, insbesondere die Saugmuffe, eine mechanische Verbindung mittels der Verbindungsmuffe herstellen kann. Das Signalgeberelement ist in dieser Ausführungsform an dem Sauggerätverbindungselement, insbesondere der Verbindungsmuffe, angeordnet.

In einer Ausführungsform ist das Signalgeberelement ein mechanisches Signalgeberelement. Das mechanische Signalgeberelement kann hierbei als ein mechanischer Schalter zur Erzeugung von elektrischen Signalen ausgebildet sein.

In einer nächsten Ausführungsform ist das Signalgeberelement ein elektrisches Signalgeberelement. Hierbei kann das elektrische Signalgeberelement zumindest eine Spule und/oder zumindest eine Antenne umfassen, um elektrische Signale zu erzeugen. Hierzu kann beispielsweise ein kapazitives Sensorboard verwendet werden. Das kapazitive Sensorboard kann eine Änderung einer Dielektrizitätskonstante messen, mit einem hinterlegten Referenzwert vergleichen und hierdurch das Verbindungssignal erzeugen. Das kapazitive Sensorboard kann die Änderung der Dielektrizitätskonstante erfassen und hierüber erkennen, ob die Handwerkzeugmaschine mit dem Sauggerät verbunden ist. Es ist auch denkbar, dass mit Hilfe der Spule und der Antenne lokal erzeugte elektrische Felder erfasst werden, um so zu prüfen, ob die Handwerkzeugmaschine mit dem Sauggerät verbunden ist. Alternativ ist es auch denkbar, dass das Sauggerät mit der Handwerkzeugmaschine einen elektrischen Kontaktschluss herstellt.

In einer weiteren Ausführungsform ist das Signalgeberelement ein optisches Signalgeberelement. Das optische Signalgeberelement kann als ein optischer Schalter mittels beispielsweise zumindest einer Lichtquelle, wie beispielsweise eine LED, zumindest einer Lichtschranke und/oder zumindest eines lichtempfindlichen Sensors, wie beispielsweise einer Photodiode, ausgebildet sein.

### Kurze Beschreibung der Zeichnungen

Die Erfindung wird nachfolgend anhand von bevorzugten Ausführungsformen erläutert. Die Zeichnungen im Folgenden zeigen:
- Fig. 1: eine schematische Ansicht eines erfindungsgemäßen Systems mit einer Handwerkzeugmaschine und einem Sauggerät;
- Fig. 2: ein Flussdiagramm eines erfindungsgemäßen Verfahrens zum Betreiben des erfindungsgemäßen Systems;
- Fig. 3: eine schematische Ansicht des erfindungsgemäßen Systems mit der Handwerkzeugmaschine, einem verbunden Zubehör für die Handwerkzeugmaschine und dem Sauggerät;
- Fig. 4a: ein schematischer Ausschnitt eines mechanischen Signalgeberelements;
- Fig. 4b: ein schematischer Ausschnitt eines elektrischen Sensorelements;
- Fig. 4c: ein schematsicher Ausschnitt eines elektrischen Signalgeberelements und eines elektrischen Sensorelements;
- Fig. 4d: ein schematischer Ausschnitt eines optischen Signalgeberelements und eines optischen Sensorelements;

### Beschreibung der Ausführungsbeispiele

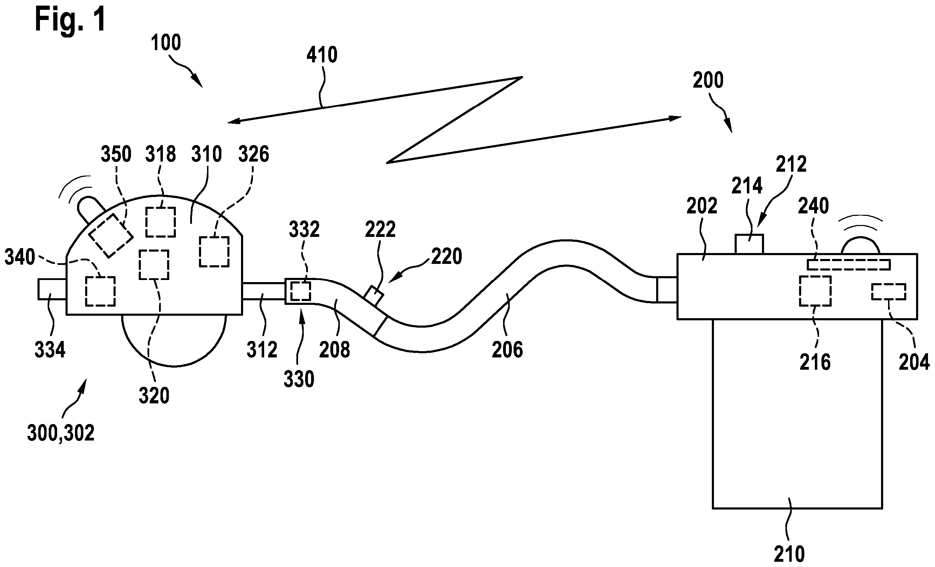

In Fig. 1 ist eine schematische Ansicht eines erfindungsgemäßen Systems 100 mit einer Handwerkzeugmaschine 300 und einem Sauggerät 200 gezeigt. In dieser Ausführungsform ist die Handwerkzeugmaschine 300 beispielhaft als eine Handkreissäge 302 ausgebildet. Bevorzugt handelt es sich bei der Handwerkzeugmaschine 300 um eine akkubetriebene Handwerkzeugmaschine. Es wird darauf hingewiesen, dass die vorliegende Erfindung nicht auf akkubetriebene Handwerkzeugmaschinen beschränkt ist, sondern auch bei netzbetriebenen oder pneumatischbetriebenen Handwerkzeugmaschinen Anwendungen finden kann, die ein Sauggerätverbindungselement 312, 314 aufweisen. In einer ersten Ausführungsform der Erfindung ist das Sauggerätverbindungselement 312 direkt und unmittelbar mit einem Handwerkzeugmaschinengehäuse 310 verbunden.

Das Sauggerät 200 umfasst ein Sauggerätgehäuse 202, eine Sauggerätenergieversorgung 204, einen Saugschlauch 206 und eine Staubsammelvorrichtung 210. Ferner umfasst das Sauggerätgehäuse 202 eine Sauggerätbedieneinheit 212. Dabei weist die Sauggerätbedieneinheit 212 ein Sauggerätbedienelement 214 auf, mit dem das Sauggerät 200 durch einen Benutzer bedient wird und Schaltsignale erzeugt. Die Schaltsignale steuern und/oder regeln eine Sauggerätantriebseinheit 216. Das Sauggerätbedienelement 214 ist als ein Hauptschalter ausgebildet. Der Hauptschalter schaltet die Sauggerätantriebseinheit 216 ein und aus. Die Sauggerätenergieversorgungseinheit 204 versorgt das Sauggerät 200 mit elektrischer Energie und ist in dieser Ausführungsform als ein akkubetriebenes Sauggerät 200 ausgebildet. Das akkubetriebene Sauggerät 200 ist mittels einem Handwerkzeugmaschinenakkupack mit elektrischer Energie versorgt. Der Handwerkzeugmaschinenakkupack ist nicht näher dargestellt. Der Saugschlauch 206 umfasst eine Saugöffnung und ist lösbar am Sauggerätgehäuse 202 anbringbar. Der Saugschlauch 206 ist mittels einer Saugmuffe 208 mit einem Sauggerätverbindungselement 312 der Handwerkzeugmaschine 100 lösbar verbindbar.

In dieser Ausführungsform umfasst das Sauggerät 200 eine Sensoreinheit 220 mit einem Sensorelement 222. Das Sensorelement 222 kann ein Prüfsignal erzeugen. Hier ist die Sensoreinheit 220 an dem Saugschlauch 206 angeordnet und das Sensorelement 222 ist mit der Saugmuffe 208 verbunden. Das Prüfsignal umfasst eine Verbindungsinformation darüber, ob die Saugmuffe 208 eine mechanische Verbindung mit dem Sauggerätverbindungselement 312 aufweist.

Weiter umfasst das Sauggerät 200 eine Sauggerätkommunikationseinheit 240. Die Sauggerätkommunikationseinheit 240 ist dazu ausgebildet, eine Kommunikationsverbindung 410 mit der Handwerkzeugmaschine 300 herzustellen. Ferner ist die Sauggerätkommunikationseinheit 240 in dem Sauggerätgehäuse 202 angeordnet.

Die Handwerkzeugmaschine 300 weist das Handwerkzeugmaschinengehäuse 310, eine Antriebseinheit 320 und eine Handwerkzeugmaschinenenergieversorgungseinheit 326 auf. Das Handwerkzeugmaschinengehäuse 310 nimmt die Antriebseinheit 320 auf, wobei die Antriebseinheit 320 dazu ausgebildet, die Handwerkzeugmaschine 300 anzutreiben. Die Handwerkzeugmaschinenenergieversorgungseinheit 326 versorgt die Handwerkzeugmaschine 300 über den Handwerkzeugmaschinenakkupacks mit elektrischer Energie. Der Handwerkzeugmaschinenakkupack ist hierbei nicht näher dargestellt. Zudem weist die Handwerkzeugmaschine 300 eine Steuereinheit 318 zur Steuerung und/oder Regelung der Antriebseinheit 320 auf.

In dieser Ausführungsform umfasst die Handwerkzeugmaschine 300 eine Signalgebereinheit 330. Die Signalgebereinheit 330 weist ein Signalgeberelement 332 und einen Handschalter 334 auf. Der Handschalter 334 erzeugt ein Betätigungssignal, sobald ein Benutzer den Handschalter 334 betätigt. Das Signalgeberelement 332 ist an dem Sauggerätverbindungselement 312 angeordnet. In dieser Ausführungsform ist das Sauggerätverbindungselement 312 eine Verbindungsmuffe für das Sauggerät 200 ausgeformt. Weiter umfasst die Handwerkzeugmaschine 300 eine Signalverarbeitungseinheit 340 zur Verarbeitung von Signalen. In dieser Ausführungsform empfängt, verarbeitet und/oder leitet die Signalverarbeitungseinheit 340 die Signale weiter.

Weiter umfasst die Handwerkzeugmaschine 300 eine Handwerkzeugmaschinenkommunikationseinheit 350 zur Herstellung der Kommunikationsverbindung 410 mit der Sauggerätkommunikationseinheit 240. Die Handwerkzeugmaschinenkommunikationseinheit 350 wird durch das Handwerkzeugmaschinengehäuse 310 aufgenommen.

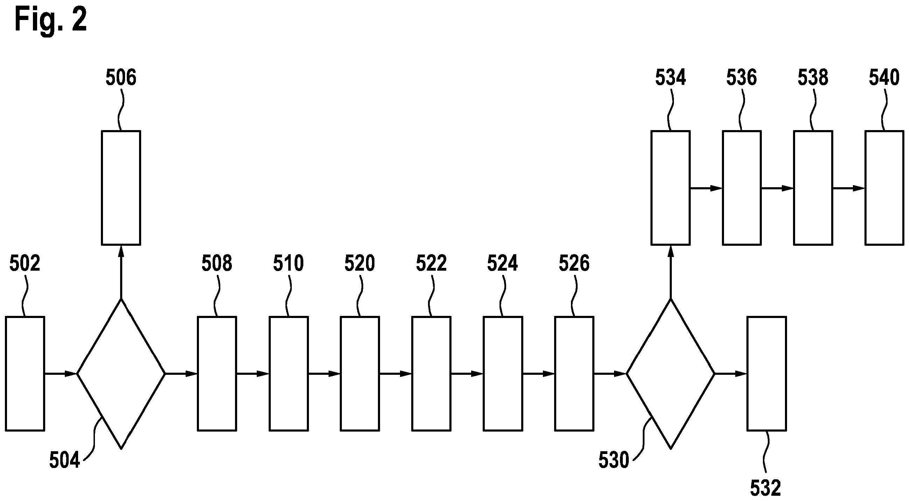

In Fig. 2 ist ein Flussdiagramm eines erfindungsgemäßen Verfahrens zum Betreiben des erfindungsgemäßen Systems 100 gezeigt. In einem Verfahrensschritt 520 wird das Sauggeräts 200 eingeschalten. In einem Verfahrensschritt 522 wird mittels der Kommunikationsverbindung 410 ein Startsignal an die Handwerkzeugmaschine 300 gesendet. Hierbei sendet die Sauggerätkommunikationseinheit 240 das Startsignal an die Handwerkzeugmaschinenkommunikationseinheit 350. In einem Verfahrensschritt 524 empfängt die Handwerkzeugmaschinenkommunikationseinheit 350 das Startsignal. In einem Verfahrensschritt 526 ist die Handwerkzeugmaschine 300 aktivierbar und die Handwerkzeugmaschine 300 kann in dem Verfahrensschritt 526 in Betrieb versetzt werden.

In einem Verfahrensschritt 502 betätigt der Benutzer den Handschalter 334 der Signalgebereinheit 330 der Handwerkzeugmaschine 300. Dabei wird ein Betätigungssignal erzeugt und an die Signalverarbeitungseinheit 340 der Handwerkzeugmaschine 300 gesendet.

In einem Verfahrensschritt 504 wird mittels des Signalgeberelements 332 der Signalgebereinheit 330 ein Verbindungssignal von der Handwerkzeugmaschine 300 und dem Sauggerät 200 erfasst. Das Signalgeberelement 332 erfasst dabei, ob das Sauggerätverbindungselement 312, 314 und die Saugmuffe 208 des Saugschlauchs 206 miteinander verbunden sind. Anschließend wird das Verbindungssignal an die Signalverarbeitungseinheit 340 übermittelt.

Wenn das Signalgeberelement 332 keine Verbindung des Sauggerätverbindungselements 312, 314 mit der Saugmuffe 208 erfassen kann, erfolgt in einem Verfahrensschritt 506 keine weitere Aktion und die Handwerkzeugmaschine 300 bleibt außer Betrieb.

Wenn das Signalgeberelement 332 eine Verbindung des Sauggerätverbindungselements 312, 314 mit der Saugmuffe 208 erfasst, wird in einem Verfahrensschritt 508 das Betätigungssignal und das Verbindungssignal als das Kommunikationssignal an das Sauggerät 200 übermittelt. Hierzu sendet die Signalverarbeitungseinheit 340 das Betätigungssignal und das Verbindungssignal an die Handwerkzeugkommunikationseinheit 350, wobei diese das Betätigungssignal und das Verbindungssignal als das Kommunikationssignal an die Sauggerätkommunikationseinheit 240 sendet.

In einem Verfahrensschritt 510 empfängt die Sauggerätkommunikationseinheit 240 das Kommunikationssignal. Die Sauggerätkommunikationseinheit 240 verarbeitet das Kommunikationssignal, wobei die Sauggerätantriebseinheit 216 eingeschalten wird, falls das Kommunikationssignal das Betätigungssignal und das Verbindungssignal umfassen. Insbesondere wird die Sauggerätantriebseinheit 216 eingeschalten wird, falls das Betätigungssignal und das Verbindungssignal in dem Kommunikationssignal umfasst sind.

Weiter wandelt die Sauggerätkommunikationseinheit 240 das Kommunikationssignal in das Startsignal um, sobald die Sauggerätantriebseinheit 216 in dem Verfahrensschritt 520 eingeschalten wurde. Anschließend wird das Startsignal in dem Verfahrensschritt 522 an die Handwerkzeugmaschine 300 übermittelt.

In einem Verfahrensschritt 530 wird mittels des Sensorelements 222 der Sensoreinheit 220 des Sauggeräts 200 ein Prüfsignal erzeugt. Das Sensorelement 222 prüft, ob nach der Aktivierung der Handwerkzeugmaschine 300 weiterhin eine mechanische Verbindung von dem Sauggerät 200, in dieser Ausführungsform der Saugmuffe 208, mit der Handwerkzeugmaschine 300, in dieser Ausführungsform dem Sauggerätverbindungselement 312, vorhanden ist. Anschließend wandelt das Sensorelement 222 das Prüfsignal in ein Steuersignal zur Steuerung des Sauggeräts 200 und der Handwerkzeugmaschine 300 um.

Falls weiterhin die mechanische Verbindung von dem Sauggerät 200 und der Handwerkzeugmaschine vorhanden ist, erfolgt in einem Verfahrensschritt 532 keine weitere Aktion und die Handwerkzeugmaschine 300 ist weiterhin mit dem Sauggerät 200 verwendbar.

Falls nach der Aktivierung der Handwerkzeugmaschine 300 keine mechanische Verbindung von dem Sauggerät 200 mit der Handwerkzeugmaschine 300 vorhanden ist, wird die Sauggerätantriebseinheit 216 in einem Verfahrensschritt 534 abgeschalten. Anschließend wird das Steuersignal von der Sensoreinheit 220 an die Sauggerätkommunikationseinheit 240 übermittelt. In einem Verfahrensschritt 536 übermittelt die Sauggerätkommunikationseinheit 240 das Steuersignal mittels der Kommunikationsverbindung 410 an Handwerkzeugmaschinenkommunikationseinheit 350. In einem Verfahrensschritt 538 empfängt die Handwerkzeugmaschinenkommunikationseinheit 350 das Steuersignal und übermittelt dieses anschließend an die Signalverarbeitungseinheit 340. Anschließend wird das Steuersignal von der Signalverarbeitungseinheit 340 empfangen, verarbeitet und an die Steuereinheit 318 der Handwerkzeugmaschine 300 übermittelt. In einem Verfahrensschritt 540 steuert und/oder regelt die Steuereinheit 318 die Antriebseinheit 320 und stoppt diese bei fehlender mechanischer Verbindung von der Saugmuffe 208 mit dem Sauggerätverbindungselement 312.

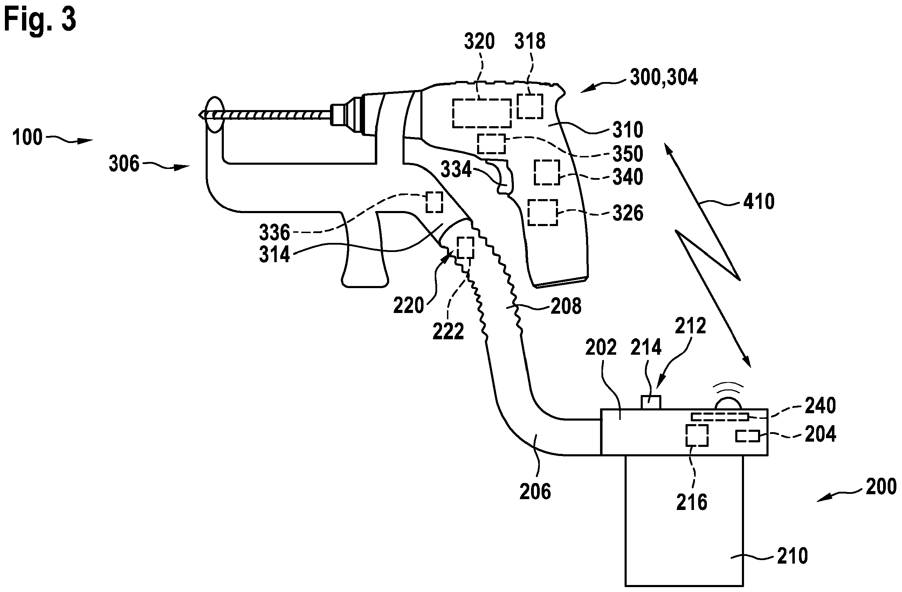

In Fig. 3 ist eine zweite Ausführungsform der Erfindung dargestellt. In der zweiten Ausführungsform ist die Handwerkzeugmaschine 300 als ein beispielhafter Bohrhammer 304 ausgebildet. Weiter weist die Handwerkzeugmaschine 300 in der zweiten Ausführungsform ein Zubehör 306, hier ein Absaugmodul, zur Staubabsaugung auf. Das Zubehör 306 ist elektrisch und mechanisch mit der Handwerkzeugmaschine 300 der zweiten Ausführungsform lösbar verbindbar. Mittels der elektrischen Verbindung mit der Handwerkzeugmaschine 300 wird das Zubehör 306 über die Handwerkzeugmaschinenenergieversorgungseinheit 326 mit elektrischer Energie versorgt. Das Zubehör 306 weist ein Sauggerätverbindungselement 314 auf, in dieser Ausführungsform eine Verbindungsmuffe für das Sauggerät 200. Hierbei ist das Sauggerätverbindungselement 314 mit der Saugmuffe 208 des Sauggeräts 200 lösbar verbindbar. Weiter weist in der zweiten Ausführungsform das Zubehör 306 ein Signalgeberelement 336 auf. Die in Fig. 2 beschriebenen Verfahrensschritte sind auch für die zweite Ausführungsform analog durchführbar, mit dem Unterschied, dass das Signalgeberelement 336 das Verbindungssignal mit der Saugmuffe 208 erfasst und an die Signalverarbeitungseinheit 340 übermittelt.

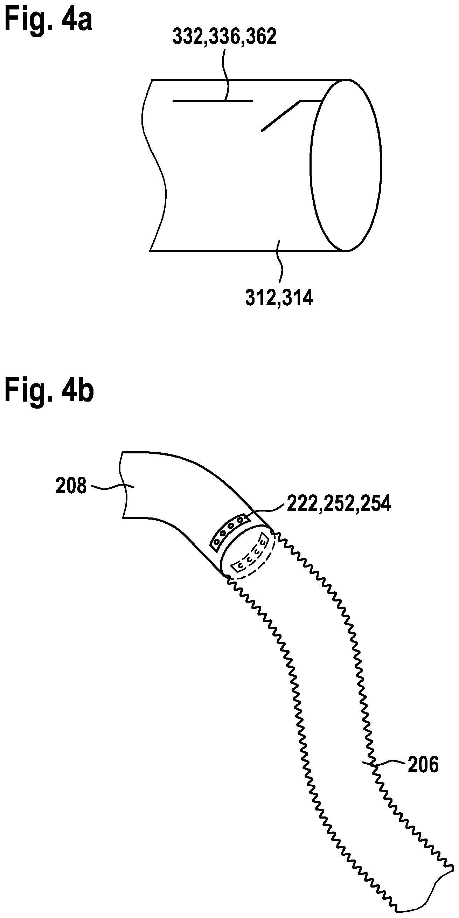

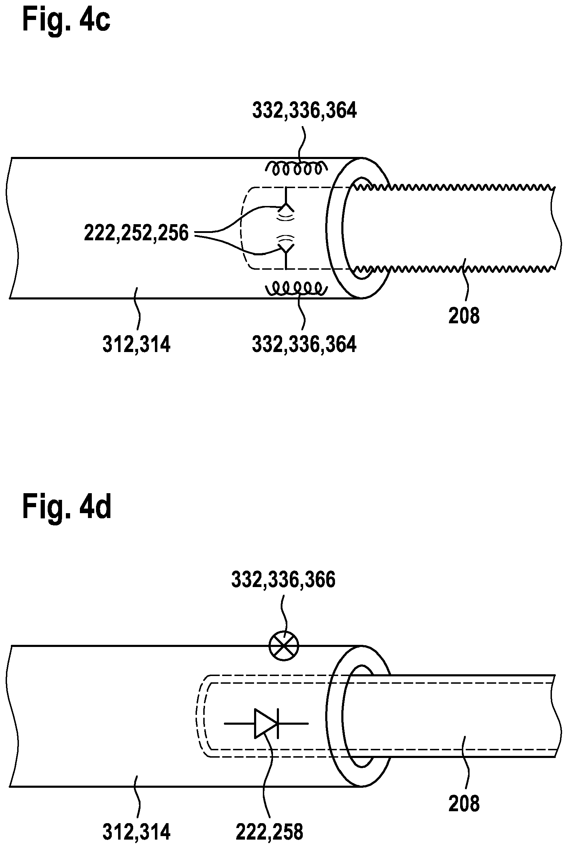

In Fig. 4 sind Ausführungsformen des Signalgeberelements 332, 336, sowie des Sensorelements 222 gezeigt. Fig. 4a stellt eine Ausführungsform des Signalgeberelements 332, 336 als ein mechanisches Signalgeberelement 362 dar. Hierbei ist das mechanische Signalgeberelement 362 als ein mechanischer Schalter zur Erzeugung von elektrischen Signalen ausgeformt. Fig. 4b zeigt das Sensorelement 222 als ein elektrisches Sensorelement 252 . Hierbei ist das elektrische Sensorelement 252 ein kapazitives Sensorboard 254. Das kapazitive Sensorboard 254 misst Änderungen einer Dielektrizitätskonstante und vergleicht diese mit einem hinterlegten Referenzwert. Hierüber erkennt das Sauggerät 200, ob die mechanische Verbindung von dem Sauggerät 200 mit der Handwerkzeugmaschine 300 ausgeformt ist. Fig. 4c zeigt eine weitere Ausführungsform des elektrischen Sensorelements 252, sowie eine Ausführungsform des Signalgeberelements 332, 336 als ein elektrisches Signalgeberelement 364. In Fig. 4c ist das elektrische Sensorelement 252 als eine Antenne 256 ausgeformt, wohingegen das elektrische Signalgeberelement 364 als eine Spule ausgebildet ist. Fig. 4d stellt eine Ausführungsform des Signalgeberelements 332, 336 als ein optisches Signalgeberelement 366 dar. In dieser Ausführungsform ist das optische Signalgeberelement 366 als eine Lichtquelle, hier eine LED, ausgebildet. In dieser Ausführungsform ist das Sensorelement 222 ein optisches Sensorelement 258. Hier ist das optische Sensorelement 258 als ein lichtempfindlicher Sensor, beispielsweise eine Photodiode, ausgeformt.

## Patentansprüche

1. Verfahren zum Betreiben eines Systems (100), wobei das System (100) zumindest ein Sauggerät (200) und zumindest eine Handwerkzeugmaschine (300) umfasst,
- wobei eine Kommunikationsverbindung (410) zwischen dem Sauggerät (200) und der Handwerkzeugmaschine (300), mittels zumindest einer Sauggerätkommunikationseinheit (240) und zumindest einer Handwerkzeugmaschinenkommunikationseinheit (350), hergestellt wird,
- wobei zumindest ein Kommunikationssignal mittels der Kommunikationsverbindung (410) von der Handwerkzeugmaschinenkommunikationseinheit (350) zu der Sauggerätkommunikationseinheit (240) übermittelt wird,
**dadurch gekennzeichnet, dass**
- beim Einschalten des Sauggeräts (200) zumindest ein Startsignal an die Handwerkzeugmaschine (300) gesendet wird,
- wobei die Handwerkzeugmaschine (300) nur aktivierbar wird, falls das Startsignal von der Handwerkzeugmaschine (300) empfangen wird.

2. Verfahren nach Anspruch 1, **dadurch gekennzeichnet, dass**
- zumindest ein Betätigungssignal mittels eines Handschalters (334) einer Signalgebereinheit (330) der Handwerkzeugmaschine (300) erzeugt und an eine Signalverarbeitungseinheit (340) der Handwerkzeugmaschine (300) übermittelt wird,
- wobei das Betätigungssignal als das Kommunikationssignal an das Sauggerät (200) übermittelt wird.

3. Verfahren nach Anspruch 2, **dadurch gekennzeichnet, dass**
- zumindest ein Verbindungssignal von der Handwerkzeugmaschine (300) und dem Sauggerät (200) mittels eines Signalgeberelements (332, 336, 362, 364, 366) der Signalgebereinheit (330) erfasst und an die Signalverarbeitungseinheit (340) übermittelt wird,
- wobei das Verbindungssignal als das Kommunikationssignal an das Sauggerät (200) übermittelt wird.

4. Verfahren nach Anspruch 2 und 3, **dadurch gekennzeichnet, dass**
- das Sauggerät (200), insbesondere die Sauggerätkommunikationseinheit (240), das Kommunikationssignal empfängt,
- eine Sauggerätantriebseinheit (216) eingeschalten wird, falls das Kommunikationssignal das Betätigungssignal und das Verbindungssignal umfasst,
- wobei nach dem Einschalten der Sauggerätantriebseinheit (216) die Sauggerätkommunikationseinheit (240) das Kommunikationssignal in das Startsignal umwandelt.

5. Verfahren nach einem der vorhergehenden Ansprüche, **dadurch gekennzeichnet, dass**
- zumindest ein Prüfsignal zum Prüfen einer, insbesondere mechanischen, Verbindung von dem Sauggerät (200) mit der Handwerkzeugmaschine (300) mittels eines Sensorelements (222, 252, 254, 256) einer Sensoreinheit (220) des Sauggeräts (200) erzeugt und in zumindest ein Steuersignal zur Steuerung des Sauggeräts (200) und/oder der Handwerkzeugmaschine (300) umgewandelt wird.

6. Verfahren nach Anspruch 5, **dadurch gekennzeichnet, dass**
- das Steuersignal von dem Sauggerät (200), insbesondere der Sauggerätkommunikationseinheit (240), an die Handwerkzeugmaschine (300), insbesondere die Handwerkzeugmaschinenkommunikationseinheit (350), übermittelt wird,
- das Steuersignal von der Signalverarbeitungseinheit (340) empfangen, verarbeitet und/oder zumindest an eine Steuereinheit (318) der Handwerkzeugmaschine (300) weitergeleitet wird,
- wobei die Steuereinheit (318) die Handwerkzeugmaschine (300) steuert und/oder regelt.

7. Verfahren nach Anspruch 6, **dadurch gekennzeichnet, dass**
- falls das Steuersignal ein Stoppsignal ist, das Sauggerät (200) und die Handwerkzeugmaschine (300), insbesondere eine Antriebseinheit (320), gestoppt werden,
- falls das Steuersignal ein Aktivsignal ist, das Sauggerät (200) und die Handwerkzeugmaschine (300), insbesondere eine Antriebseinheit (320), weiterhin betreibbar sind.

8. System (100) zur Durchführung des Verfahrens nach einem der vorhergehenden Ansprüche, wobei das System (100) zumindest ein Sauggerät (200) und zumindest eine Handwerkzeugmaschine (300) umfasst, wobei das Sauggerät (200) zumindest eine Sauggerätkommunikationseinheit (240) und die Handwerkzeugmaschine (300) zumindest eine Handwerkzeugmaschinenkommunikationseinheit (350) aufweist, wobei die Sauggerätkommunikationseinheit (240) und die Handwerkzeugmaschinenkommunikationseinheit (350) eine Kommunikationsverbindung (410) herstellen.

9. System (100) nach Anspruch 8, **dadurch gekennzeichnet, dass** die Handwerkzeugmaschine (300) eine Signalgebereinheit (330) aufweist, wobei die Signalgebereinheit (330) zumindest ein Signalgeberelement (332, 336, 362, 364, 366) und zumindest einen Handschalter (334) zur Erzeugung eines Betätigungssignals umfasst, und die Handwerkzeugmaschine (300) eine Signalverarbeitungseinheit (340) aufweist, wobei die Signalverarbeitungseinheit (340) dazu ausgebildet ist, zumindest Signale von zumindest der Signalgebereinheit (330) zu empfangen, zu verarbeiten und/oder weiterzuleiten.

10. System (100) nach Anspruch 8 oder 9, **dadurch gekennzeichnet, dass** das Sauggerät (200) eine Sensoreinheit (220) mit zumindest einem Sensorelement (222, 252, 254, 256, 258) zum Erzeugen eines Prüfsignals aufweist.

11. System (100) nach Anspruch 9 oder 10, **dadurch gekennzeichnet, dass** das Signalgeberelement (332, 362, 364, 366) an zumindest einem Teil, insbesondere zumindest einem Sauggerätverbindungselement (312), der Handwerkzeugmaschine (300) angeordnet ist.

12. System (100) nach Anspruch 9 oder 10, **dadurch gekennzeichnet, dass** das Signalgeberelement (336, 362, 364, 366) an zumindest einem Teil, insbesondere einem Sauggerätverbindungselement (314), eines Zubehörs (306) der Handwerkzeugmaschine (300) angeordnet ist, wobei das Zubehör (306) mechanisch und/oder elektrisch mit der Handwerkzeugmaschine (300) verbindbar ist.

13. System (100) nach einem der Ansprüche 9 bis 12, **dadurch gekennzeichnet, dass** das Signalgeberelement (332, 336) ein mechanisches Signalgeberelement (362) ist.

14. System (100) nach einem der Ansprüche 9 bis 12, **dadurch gekennzeichnet, dass** das Signalgeberelement (332, 336) ein elektrisches Signalgeberelement (364) ist.

15. System (100) nach einem der Ansprüche 9 bis 12, **dadurch gekennzeichnet, dass** das Signalgeberelement (332, 336) ein optisches Signalgeberelement (366) ist.

## Claims

1. Method for operating a system (100), the system (100) comprising at least one suction device (200) and at least one handheld power tool (300),
- wherein a communication connection (410) is set up between the suction device (200) and the handheld power tool (300) by means of at least one suction device communication unit (240) and at least one handheld power tool communication unit (350),
- wherein at least one communication signal is transmitted from the handheld power tool communication unit (350) to the suction device communication unit (240) by means of the communication connection (410),
**characterized in that**
- switching on the suction device (200) results in at least one start signal being sent to the handheld power tool (300),
- wherein the handheld power tool (300) is able to be activated only if the start signal is received by the handheld power tool (300).

2. Method according to Claim 1, **characterized in that**
- at least one operating signal is generated by means of a manual switch (334) of a signal transmitter unit (330) of the handheld power tool (300) and is transmitted to a signal processing unit (340) of the handheld power tool (300),
- wherein the operating signal is transmitted to the suction device (200) as the communication signal.

3. Method according to Claim 2, **characterized in that**
- at least one connection signal of the handheld power tool (300) and the suction device (200) is detected by means of a signal transmitter element (332, 336, 362, 364, 366) of the signal transmitter unit (330) and is transmitted to the signal processing unit (340),
- wherein the connection signal is transmitted to the suction device (200) as the communication signal.

4. Method according to Claims 2 and 3, **characterized in that**
- the suction device (200), in particular the suction device communication unit (240), receives the communication signal,
- a suction device drive unit (216) is switched on if the communication signal comprises the operating signal and the connection signal,
- wherein the suction device communication unit (240) converts the communication signal into the start signal after the suction device drive unit (216) has been switched on.

5. Method according to one of the preceding claims, **characterized in that**
- at least one test signal for testing a, in particular mechanical, connection of the suction device (200) to the handheld power tool (300) is generated by means of a sensor element (222, 252, 254, 256) of a sensor unit (220) of the suction device (200) and is converted into at least one control signal for controlling the suction device (200) and/or the handheld power tool (300).

6. Method according to Claim 5, **characterized in that**
- the control signal is transmitted from the suction device (200), in particular the suction device communication unit (240), to the handheld power tool (300), in particular the handheld power tool communication unit (350),
- the control signal is received by the signal processing unit (340), processed and/or forwarded at least to a control unit (318) of the handheld power tool (300),
- wherein the control unit (318) controls and/or regulates the handheld power tool (300).

7. Method according to Claim 6, **characterized in that**
- if the control signal is a stop signal, the suction device (200) and the handheld power tool (300), in particular a drive unit (320), are stopped,
- if the control signal is an active signal, the suction device (200) and the handheld power tool (300), in particular a drive unit (320), can continue to be operated.

8. System (100) for carrying out the method according to one of the preceding claims, wherein the system (100) comprises at least one suction device (200) and at least one handheld power tool (300), the suction device (200) having at least one suction device communication unit (240) and the handheld power tool (300) having at least one handheld power tool communication unit (350), wherein the suction device communication unit (240) and the handheld power tool communication unit (350) set up a communication connection (410).

9. System (100) according to Claim 8, **characterized in that** the handheld power tool (300) has a signal transmitter unit (330), the signal transmitter unit (330) comprising at least one signal transmitter element (332, 336, 362, 364, 366) and at least one manual switch (334) for generating an operating signal, and the handheld power tool (300) has a signal processing unit (340), the signal processing unit (340) being designed to receive, process and/or forward at least signals from at least the signal transmitter unit (330) .

10. System (100) according to Claim 8 or 9, **characterized in that** the suction device (200) has a sensor unit (220) having at least one sensor element (222, 252, 254, 256, 258) for generating a test signal.

11. System (100) according to Claim 9 or 10, **characterized in that** the signal transmitter element (332, 362, 364, 366) is arranged on at least one part, in particular at least one suction device connecting element (312), of the handheld power tool (300).

12. System (100) according to Claim 9 or 10, **characterized in that** the signal transmitter element (336, 362, 364, 366) is arranged on at least one part, in particular a suction device connecting element (314), of an accessory (306) of the handheld power tool (300), the accessory (306) being able to be connected to the handheld power tool (300) mechanically and/or electrically.

13. System (100) according to one of Claims 9 to 12, **characterized in that** the signal transmitter element (332, 336) is a mechanical signal transmitter element (362) .

14. System (100) according to one of Claims 9 to 12, **characterized in that** the signal transmitter element (332, 336) is an electrical signal transmitter element (364) .

15. System (100) according to one of Claims 9 to 12, **characterized in that** the signal transmitter element (332, 336) is an optical signal transmitter element (366) .

## Revendications

1. Procédé permettant de faire fonctionner un système (100), dans lequel le système (100) comprend au moins un appareil d'aspiration (200) et au moins un outil à main (300),
- dans lequel une liaison de communication (410) est établie entre l'appareil d'aspiration (200) et l'outil à main (300) au moyen d'au moins une unité de communication d'appareil d'aspiration (240) et d'au moins une unité de communication d'outil à main (350),
- dans lequel au moins un signal de communication est transmis au moyen de la liaison de communication (410) de l'unité de communication d'outil à main (350) à l'unité de communication d'appareil d'aspiration (240),
**caractérisé en ce que**
- au moins un signal de démarrage est envoyé à l'outil à main (300) à la mise sous tension de l'appareil d'aspiration (200),
- dans lequel l'outil à main (300) ne peut être activé que si le signal de démarrage est reçu par l'outil à main (300).

2. Procédé selon la revendication 1, **caractérisé en ce que**
- au moins un signal d'actionnement est généré au moyen d'un interrupteur manuel (334) d'une unité de transmission de signal (330) de l'outil à main (300) et est transmis à une unité de traitement de signal (340) de l'outil à main (300),
- dans lequel le signal d'actionnement est transmis sous forme de signal de communication à l'appareil d'aspiration (200).

3. Procédé selon la revendication 2, **caractérisé en ce que**
- au moins un signal de liaison provenant de l'outil à main (300) et de l'appareil d'aspiration (200) est détecté au moyen d'un élément de transmission de signal (332, 336, 362, 364, 366) de l'unité de transmission de signal (330) et est transmis à l'unité de traitement de signal (340),
- dans lequel le signal de liaison est transmis comme le signal de communication à l'appareil d'aspiration (200).

4. Procédé selon les revendications 2 et 3, **caractérisé en ce que**
- l'appareil d'aspiration (200), en particulier l'unité de communication d'appareil d'aspiration (240), reçoit le signal de communication,
- une unité d'entraînement d'appareil d'aspiration (216) est mise sous tension si le signal de communication comprend le signal d'actionnement et le signal de liaison,
- dans lequel après la mise sous tension de l'unité d'entraînement d'appareil d'aspiration (216), l'unité de communication d'appareil d'aspiration (240) convertit le signal de communication en signal de démarrage.

5. Procédé selon l'une quelconque des revendications précédentes, **caractérisé en ce que**
- au moins un signal de contrôle pour contrôler une liaison, en particulier mécanique, entre l'appareil d'aspiration (200) et l'outil à main (300) au moyen d'un élément capteur (222, 252, 254, 256) d'une unité de capteur (220) de l'appareil d'aspiration (200) est généré, et est converti en au moins un signal de commande pour commander l'appareil d'aspiration (200) et/ou l'outil à main (300).

6. Procédé selon la revendication 5, **caractérisé en ce que**
- le signal de commande est transmis de l'appareil d'aspiration (200), en particulier de l'unité de communication d'appareil d'aspiration (240), à l'outil à main (300), en particulier à l'unité de communication d'outil à main (350),
- le signal de commande est reçu, traité et/ou retransmis au moins à une unité de commande (318) de l'outil à main (300) par l'unité de traitement de signal (340),
- dans lequel l'unité de commande (318) commande et/ou régule l'outil à main (300).

7. Procédé selon la revendication 6, **caractérisé en ce que**
- si le signal de commande est un signal d'arrêt, l'appareil d'aspiration (200) et l'outil à main (300), en particulier une unité d'entraînement (320), sont arrêtés,
- si le signal de commande est un signal actif, l'appareil d'aspiration (200) et l'outil à main (300), en particulier une unité d'entraînement (320), peuvent toujours fonctionner.

8. Système (100) permettant d'exécuter le procédé selon l'une quelconque des revendications précédentes, dans lequel le système (100) comprend au moins un appareil d'aspiration (200) et au moins un outil à main (300), dans lequel l'appareil d'aspiration (200) présente au moins une unité de communication d'appareil d'aspiration (240) et l'outil à main (300) présente au moins une unité de communication d'outil à main (350), dans lequel l'unité de communication d'appareil d'aspiration (240) et l'unité de communication d'outil à main (350) établissent une liaison de communication (410) .

9. Système (100) selon la revendication 8, **caractérisé en ce que** l'outil à main (300) présente une unité de transmission de signal (330), dans lequel l'unité de transmission de signal (330) comprend au moins un élément de transmission de signal (332, 336, 362, 364, 366) et au moins une interrupteur manuel (334) pour générer un signal d'actionnement, et l'outil à main (300) présente une unité de traitement de signal (340), dans lequel l'unité de traitement de signal (340) est réalisée pour recevoir, traiter et/ou retransmettre au moins des signaux au moins de l'unité de transmission de signal (330).

10. Système (100) selon la revendication 8 ou 9, **caractérisé en ce que** l'appareil d'aspiration (200) présente une unité de capteur (220) munie d'au moins un élément capteur (222, 252, 254, 256, 258) pour générer un signal de contrôle.

11. Système (100) selon la revendication 9 ou 10, **caractérisé en ce que** l'élément de transmission de signal (332, 362, 364, 366) est disposé sur au moins une partie, en particulier un élément de liaison d'appareil d'aspiration (312), de l'outil à main (300).

12. Système (100) selon la revendication 9 ou 10, **caractérisé en ce que** l'élément de transmission de signal (336, 362, 364, 366) est disposé sur au moins une partie, en particulier un élément de liaison d'appareil d'aspiration (314), d'un accessoire (306) de l'outil à main (300), dans lequel l'accessoire (306) peut être relié mécaniquement et/ou électriquement à l'outil à main (300).

13. Système (100) selon l'une quelconque des revendications 9 à 12, **caractérisé en ce que** l'élément de transmission de signal (332, 336) est un élément de transmission de signal (362) mécanique.

14. Système (100) selon l'une quelconque des revendications 9 à 12, **caractérisé en ce que** l'élément de transmission de signal (332, 336) est un élément de transmission de signal (364) électrique.

15. Système (100) selon l'une quelconque des revendications 9 à 12, **caractérisé en ce que** l'élément de transmission de signal (332, 336) est un élément de transmission de signal (366) optique.
